**Europäisches Patentamt**

**European Patent Office**

**Office européen des brevets**

(19)

(11) Veröffentlichungsnummer: **0 111 572**
**A1**

(12) # EUROPÄISCHE PATENTANMELDUNG

(21) Anmeldenummer: **82111505.2**

(22) Anmeldetag: **11.12.82**

(51) Int. Cl.³: **G 01 G 9/00**

(43) Veröffentlichungstag der Anmeldung:
**27.06.84 Patentblatt 84/26**

(84) Benannte Vertragsstaaten:
**AT BE CH DE FR GB IT LI LU NL SE**

(71) Anmelder: **CARL SCHENCK AG**
**Landwehrstrasse 55 Postfach 40 18**
**D-6100 Darmstadt(DE)**

(72) Erfinder: **Wanner, Theodor**
**Kapellenstrasse 6**
**D-7583 Ottersweier(DE)**

(72) Erfinder: **Hampel, Albert**
**Huttenstrasse 23**
**D-7500 Karlsruhe(DE)**

(74) Vertreter: **Brand, Fritz, Dipl.-Ing.**
**Carl Schenck AG Patentabteilung Landwehrstrasse 55**
**Postfach 4018**
**D-6100 Darmstadt(DE)**

(54) **Verfahren zur Bestimmung des Fördergut-Massenstroms eines Förderbandes und radiometrische Bandwaage hierfür.**

(57) An mehreren über die Förderbandbreite eines Förderbandes (1) örtlich verteilten Stellen wird zeitlich nacheinander eine Kernstrahlung durch das auf dem Förderband (1) liegende Fördergut (2) hindurchgesandt und von einem einzigen Detektor (11) empfangen. Ein von dem Detektor abgegebenes Signal ist dem Bandbelegungsprofil in Querrichtung und Längsrichtung des Förderbandes (1) proportional. Unter dem Förderband (1) ist hinter einem quer zur Förderrichtung verlaufenden Strahlungsaustrittsspalt (6) einer Abschirmung (7) ein drehbarer Trägerzylinder (5) angeordnet, der mehrere Strahlungsquellen (3) in schraubenlinienförmiger Anordnung trägt, die bei einer Drehung des Trägerzylinders (5) nacheinander unter den Strahlungsaustrittsspalt (6) gelangen.

FIG.1

EP 0 111 572 A1

Carl Schenck AG, 6100 Darmstadt

Verfahren zur Bestimmung des Fördergut-Massenstroms
eines Förderbandes und radiometrische Bandwaage hierfür

Die Erfindung betrifft ein Verfahren zur Bestimmung des
Fördergut-Massenstroms eines Förderbandes mittels einer
radiometrischen Bandwaage, bei dem eine von mindestens
einer Strahlungsquelle durch das Fördergut hindurchgesandte Kernstrahlung an mehreren quer zur Förderrichtung über die Förderbandbreite verteilten Stellen gesondert erfasst und in ein dem Massenstrom und der Fördergut-Massenverteilung quer zur Förderrichtung proportionales Signal umgewandelt wird.

Bei der Bestimmung des Fördergut-Massenstroms mittels
radiometrischer Bandwaagen wird eine im allgemeinen
stabförmige Gamma-Strahlungsquelle unterhalb des Förderbandes hinter einer Abschirmung angebracht, die einen
Strahlungsaustrittsspalt aufweist. Aus diesem tritt ein
schmales Strahlungsband aus, durchdringt das Förderband
mit dem darauf befindlichen Fördergut und wird von einem Detektor empfangen. Dieser Detektor mißt die von der durchstrahlten Masse geschwächte Strahlung. Das so erhaltene Signal ist einem Mittelwert der Fördergut-Massenverteilung quer zur Förderrichtung proportional. Bei gleichzeitiger Ermittlung der Fördergeschwindigkeit läßt sich hieraus ein dem Fördergut-Massenstrom proportionales Signal ableiten. Deshalb wird diese Einrichtung als radiometrische Bandwaage bezeichnet, auch wenn kein direkter Wägevorgang erfolgt.

Bei diesem bekannten Verfahren gehen Unregelmäßigkeiten der Fördergut-Massenverteilung quer zur Förderrichtung nur in den erhaltenen Mittelwert ein, der daher mit einem Fehler behaftet ist, der durch Änderungen des Fördergut-Massenprofils quer zur Förderrichtung verursacht wird.

Um diese Fehlereinflüsse zu verringern, werden bei einem bekannten Verfahren der eingangs genannten Gattung (DD-PS 130963) quer zur Förderrichtung unter dem Förderband mehrere, voneinander getrennte Strahlungsquellen angeordnet, denen eine gleiche Anzahl von Detektoren über dem Förderband zugeordnet ist. Dadurch läßt sich mit einem durch die Breite der einzelnen Strahlungsquellen und Detektoren bestimmten groben Raster eine jedoch sehr ungenaue Bestimmung des Massenbelegungsprofils quer zur Förderrichtung erreichen. Der hierfür erforderliche technische Aufwand ist jedoch verhältnismäßig hoch, ohne daß eine wesentliche Verringerung der Fehlermöglichkeiten erreicht wird.

Aufgabe der Erfindung ist es, ein Verfahren der eingangs genannten Art zu schaffen, das mit wesentlich geringerem Aufwand eine erheblich genauere Erfassung des Bandbelegungsprofils quer zur Förderrichtung für die Bestimmung des Fördergut-Massenstroms ermöglicht.

Die Aufgabe wird erfindungsgemäß dadurch gelöst, daß an den über die Förderbandbreite örtlich verteilten Stellen zeitlich nacheinander eine Kernstrahlung durch das Fördergut hindurchgesandt wird. Durch diese Maßnahme wird erreicht, daß zu jedem Zeitpunkt nur an einer einzigen Stelle eine Durchstrahlung des Förderguts erfolgt. Die nacheinander an den verschiedenen Stellen der Bandbreite durch das Fördergut gesandten Strahlungen können von einem einzigen Detektor nacheinander erfasst werden, der Signale an eine Auswerteschaltung leitet. Diese zeitlich aufeinander folgenden Signale sind der örtlichen Fördergut-Massenverteilung quer zur Förderrichtung proportional. Man erhält somit ein Massenbelegungsprofil sowohl in Querrichtung als auch in Längsrichtung des auf dem Förderband transportierten Förderguts und kann daraus mit hoher Genauigkeit den Massenstrom ermitteln, ohne daß Veränderungen der Bandbelegung zu Meßfehlern führen. Eine erfindungsgemäße Möglichkeit, nacheinander an verschiedenen Stellen des Fördergut-Querprofils eine Durchstrahlung vorzunehmen, besteht darin, daß eine Strahlungsquelle entlang eines quer zur Förderrichtung verlaufenden Stahlungsaustrittsspalts bewegt wird. Eine andere Möglichkeit besteht darin, daß mehrere quer zur Förderrichtung verteilte Strahlungsquellen nacheinander zur

Aussendung von Strahlung frei gegeben werden, beispielsweise indem diese Strahlungsquellen nacheinander in den Austrittsbereich des Strahlungsaustrittsspalts bewegt werden.

Die Erfindung betrifft weiter eine radiometrische Bandwaage zur Durchführung des Verfahrens, mit mindestens einer Strahlungsquelle, deren Kernstrahlung durch das Fördergut hindurch auf einen Detektor fällt.

Gemäß einer Ausführungsform der Erfindung ist vorgesehen, daß eine einzige Strahlungsquelle mit einem Träger verbunden ist, der entlang eines quer zur Förderrichtung verlaufenden Strahlenaustrittsspalts bewegbar ist, und daß nur ein Detektor verwendet wird. Der erforderliche Aufwand an Strahlungsenergie und damit auch an Abschirmungsmaßnahmen ist hierbei besonders gering. Durch die kontinuierliche Bewegung der Strahlungsquelle erhält man ein Signal, das mit hohe Auflösung das Bandbelegungsprofil in Querrichtung wiedergibt.

Der Träger der Strahlungsquelle kann ein über Umlenkräder geführtes endloses Band, eine Kette od.dgl. oder ein Arm sein, der längs des Strahlungsaustrittsspalts bewegbar ist.

Nach einer anderen Ausführungsform der Erfindung, bei der mehrere Strahlungsquellen vorgesehen sind, können diese längs einer Schraubenlinie auf der Mantelfläche eines achsparallel hinter dem Strahlungsaustrittsspalt angeordneten, drehantreibbaren Trägerzylinders angeordnet sein.

Weitere Ausführungsformen der Erfindung sind Gegenstand
von Unteransprüchen.

Die Erfindung wird nachfolgend an Ausführungsbeispielen
näher erläutert, die in der Zeichnung dargestellt sind.
Es zeigt:

Fig. 1  in einer perspektivischen Darstellung, teilweise
        aufgebrochen, einen Abschnitt eines Förderbandes
        mit einer radiometrischen Bandwaage, bei der
        mehrere Stahlungsquellen auf einem Trägerzylinder angeordnet sind,

Fig. 2  einen vereinfachten Querschnitt durch eine radiometrische Bandwaage, bei der eine einzige Strahlungsquelle an einem endlosen Band angebracht
        ist,

Fig. 3  einen vereinfachten Längsschnitt durch eine
        radiometrische Bandwaage ähnlich der in Fig. 1
        gezeigten Ausführungsform, wobei der die Strah-
        lungsquellen tragende Trägerzylinder ein Hohl-
        zylinder ist, und

Fig. 4  in einem Längsschnitt entsprechend der Fig. 3
        eine radiometrische Bandwaage, bei der mehrere
        Strahlungsquellen auf einzeln auslenkbaren Federzungen angebracht sind.

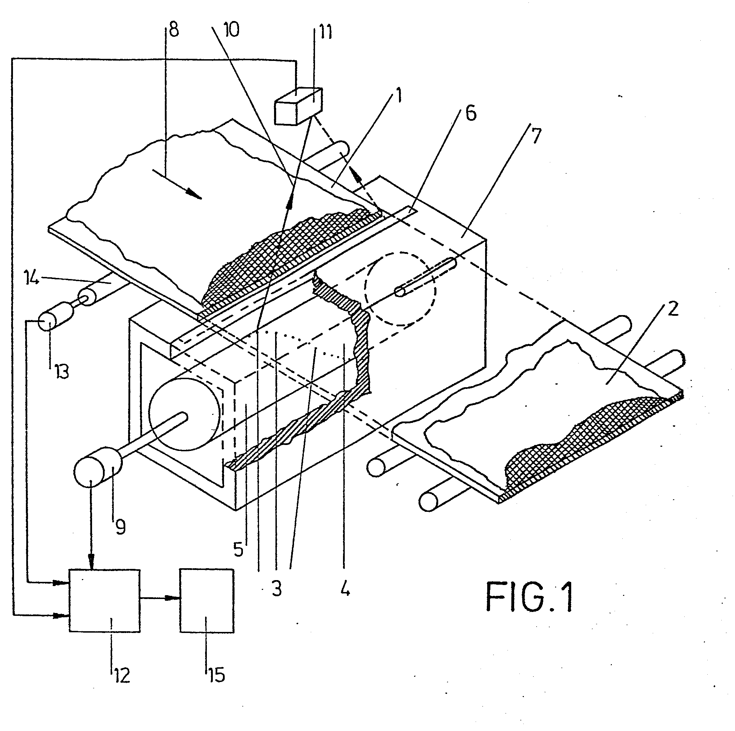

Ein Förderband 1, von dem in Fig. 1 nur Abschnitte dargestellt sind, ist mit schüttfähigem Fördergut 2 belegt,
dessen Massenstrom durch die dargestellte radiometrische
Bandwaage bestimmt wird. Diese weist eine Reihe von
Gamma-Strahlungsquellen 3 auf, die entlang einer
Schraubenlinie auf einer Mantelfläche 4 eines Trägerzylinders 5 angeordnet sind. Der Trägerzylinder 5 ist achsparallel zu einem Strahlungsaustrittsspalt 6 einer in Fig. 1 als Kasten vereinfacht angedeuteten Abschirmung 7 angeordnet. Der dicht unter dem Förderband 1 liegende Strahlungsaustrittsspalt 6 erstreckt sich quer zur Bandlängsrichtung und somit zur Förderrichtung, die durch den Pfeil 8 angedeutet ist. Der Trägerzylinder 5 ist durch einen Motor 9 zu einer Drehbewegung mit einer Drehfrequenz von beispielsweise 1 Hz antreibbar. Dabei werden die einzelnen Strahlungsquellen 3 nacheinander unter dem Strahlungsaustrittsspalt 6 vorbeibewegt, so daß sich zu jedem Zeitpunkt nur eine Strahlungsquelle 3 im Austrittsbereich des Strahlungsaustrittsspalts 6 befindet. Diese Strahlunsquelle 3 sendet einen Strahl 10 durch das Fördergut 2 auf einen Detektor 11, der im Prinzip als Ionisationskammer oder Kristall ausgeführt ist. Der Detektor 11 liefert ein der Masse des jeweils vom Strahl 10 durchstrahlten Förderguts proportionales Signal an eine Auswerteschaltung 12.

Die Auswerteschaltung 12 erhält außerdem von einem mit dem Motor 9 verbundenen Drehgeber ein Signal in Abhängigkeit von der jeweiligen Winkelstellung des Trägerzylinders 5 und von einem Geschwindigkeitsgeber 13 ein der Fördergeschwindigkeit proportionales Signal. Der Geschwindigkeitsgeber 13 ist beispielsweise mit einer der Bandrollen 14 verbunden. Aus den so erhaltenen Signalen ermittelt die Auswerteschaltung 12 das Fördergut-Massenprofil sowohl in Querrichtung als auch in Längsrichtung des Förderbandes 1 und bestimmt daraus unter Berücksichtigung der Bandgeschwindigkeit den Massenstrom. Das so erhaltene Ergebnis wird in einer Registriereinrichtung 15 gespeichert und/oder angezeigt.

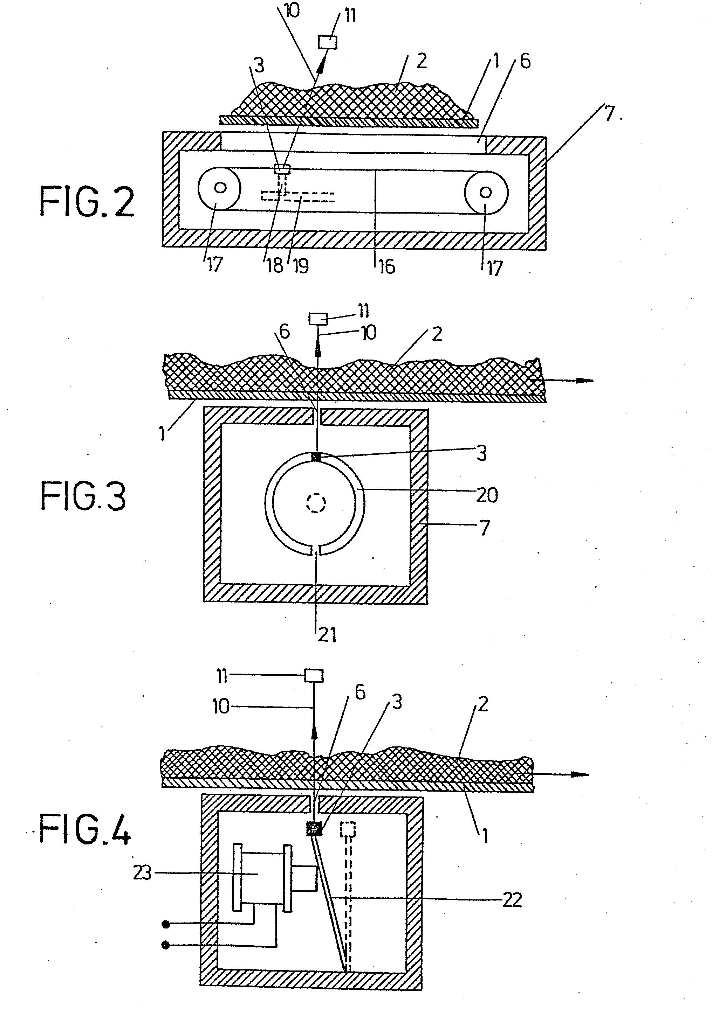

Bei der Ausführung der Bandwaage nach Fig. 2 ist nur eine einzige Strahlungsquelle 3 an einem Band 16 oder einer Kette angebracht, das endlos über Umlenkräder 17 geführt wird, wobei sich die Strahlungsquelle 3 kontinuierlich entlang dem Strahlungsaustrittsspalt 6 der Abschirmung 7 bewegt. Stattdessen kann die einzelne Strahlungsquelle 3 auch an einem Arm 18 angebracht sein, der in Fig. 2 nur mit strich/punktierten Linien angedeutet ist und durch einen seitlichen Schlitz 19 der Abschirmung 7 ragt. Der Arm 18 steht mit einem (nicht dargestellten) mechanischen Bewegungsantrieb in Verbindung.

Ähnlich wie beim Ausführungsbeispiel nach Fig. 1 ist beim Beispiel nach Fig. 3 als Träger für die auf einer Schraubenlinie angeordneten Strahlungsquellen 3 ein Trägerzylinder 20 drehbar unterhalb des Strahlungsaustrittsspalts 6 angeordnet. Der Trägerzylinder 20 ist hierbei jedoch ein geschlitzter Hohlzylinder, der jeweils gegenüber den Strahlungsquellen 3 einen ebenfalls auf einer Schraubenlinie verlaufenden Schlitz 21 aufweist. Da die Strahlungsquellen 3 nach innen und außen strahlen, senden sie bei jeder Umdrehung des Zylinder 20 zweimal einen Strahl 10 durch den Spalt 6 und durch das Fördergut 2 auf den Detektor 11.

Auch beim Ausführungsbeispiel nach Fig. 4 sind mehrere Strahlungsquellen 3 vorgesehen, die im Ruhezustand in einer Reihe angeordnet sind, die außerhalb des Austrittsbereichs des Strahlungsaustrittsspalt 6 angeordnet ist, wie in Fig. 4 mit strich/punktierten Linien angedeutet

ist. Jede Strahlungsquelle 3 ist jeweils an einem Federarm 22 angebracht, der mit seinem anderen Ende ortsfest
eingespannt ist. Mittels Elektromagneten 23, die jedem
Federarm 22 zugeordnet sind, kann jede einzelne Strahlungsquelle 3 nacheinander in den Austrittsbereich des
Strahlungsaustrittsspalts 6 geschwenkt werden, so daß
der von ihr ausgehende Strahl 10 durch das Fördergut 2
auf den Detektor 11 fällt.

Als Antriebseinrichtung für die Bewegung der einzelnen
Strahlungsquellen 3 kann an Stelle der Elektromagnete 23
beispielsweise auch eine (nicht dargestellte) Nockenwelle
verwendet werden.

Die schraubenlinienförmig auf dem Trägerzylinder 5 bzw.
20 angeordneten Strahlungsquellen 3 können auch zu einem
Band zusammengefasst sein. Beispeilsweise kann ein Kobaltdraht eine solche bandförmige Strahlungsquelle bilden.

Carl Schenck AG, 6100 Darmstadt

Verfahren zur Bestimmung des Fördergut-Massenstroms
eines Förderbandes und radiometrische Bandwaage hierfür

P a t e n t a n s p r ü c h e :

1. Verfahren zur Bestimmung des Fördergut-Massenstroms
   eines Förderbandes mittels einer radiometrischen Bandwaage, bei dem eine von mindestens einer Strahlungsquelle durch das Fördergut hindurchgesandte Kernstrahlung an mehreren quer zur Förderrichtung über
   die Förderbandbreite verteilten Stellen gesondert erfasst und in ein dem Massenstrom und der Fördergut-
   Massenverteilung quer zur Förderrichtung proportionales Signal umgewandelt wird, dadurch gekennzeichnet,
   daß an den über die Förderbandbreite örtlich verteilten Stellen zeitlich nacheinander eine Kernstrahlung
   durch das Fördergut hindurchgesandt wird.

2. Verfahren nach Anspruch 1, dadurch gekennzeichnet,
   daß eine Strahlungsquelle entlang eines quer zur Förderrichtung verlaufenden Strahlungsaustrittsspalts
bewegt wird.

3. Verfahren nach Anspruch 1, dadurch gekennzeichnet,
daß mehrere, quer zur Förderrichtung verteilten Strahlungsquellen nacheinander zur Aussendung von Strahlung freigegeben werden.

4. Verfahren nach Anspruch 1, dadurch gekennzeichnet,
daß mehrere Strahlungsquellen nacheinander in den Austrittsbereich eines Strahlungsaustrittsspalts bewegt
werden.

5. Radiometrische Bandwaage zur Durchführung des Verfahrens nach Anspruch 2, mit mindestens einer Strahlungsquelle, deren Kernstrahlung durch das Fördergut hindurch auf einen Detektor fällt, dadurch gekennzeichnet, daß eine einzige Strahlungsquelle (3) mit einem
Träger (16,18) verbunden ist, der entlang eines quer
zur Förderrichtung verlaufenden Strahlungsaustrittsspalts (6) bewegbar ist, und daß nur ein Detektor (11)
verwendet wird.

6. Bandwaage nach Anspruch 5, dadurch gekennzeichnet,
daß der Träger der Strahlungsquelle (3) ein über zwei
Umlenkräder (17) geführtes endloses Band (16), Kette
od.dgl. ist.

7. Bandwaage nach Anspruch 5, dadurch gekennzeichnet,
daß der Träger der Strahlungsquelle (3) ein längs des
Strahlungsaustrittsspalts bewegbarer Arm (18) ist.

8. Radiometrische Bandwaage zur Durchführung des Verfahrens nach Anspruch 4 mit mindestens einer Strahlungsquelle, deren Kernstrahlung durch das Fördergut hindurch auf einen Detektor fällt, dadurch gekennzeichnet, daß mehrere Strahlungsquellen (3) längs einer Schraubenlinie auf der Mantelfläche (4) eines achsparallel hinter einem quer zur Förderrichtung verlaufenden Strahlungsaustrittsspalt (6) angeordneten, drehantreibbaren Trägerzylinder (5) angeordnet sind, und daß nur ein Detektor (11) verwendet wird.

9. Bandwaage nach Anspruch 8, dadurch gekennzeichnet, daß die Strahlungsquellen (3) zu einem schraubenlinienförmig auf der Mantelfläche (4) angeordneten Band zusammengefasst sind.

10. Radiometrische Bandwaage zur Durchführung des Verfahrens nach Anspruch 4, mit mindestens einer Strahlungsquelle, deren Kernstrahlung durch das Fördergut hindurch auf einen Detektor fällt, dadurch gekennzeichnet, daß mehrere Strahlungsquellen (3) in einer Reihe außerhalb des Austrittsbereichs des Strahlungsaustrittsspalts (6) angeordnet sind und jeweils durch eine gesonderte Antriebseinrichtung (23) in den Austrittsbereich bewegbar sind, und daß nur ein Detektor (11) verwendet wird.

11. Bandwaage nach Anspruch 10, dadurch gekennzeichnet, daß die Strahlungsquellen (3) jeweils an einen Federarm (22) angebracht sind und daß die Antriebseinrichtungen Elektromagnete (23) sind.

FIG.1

FIG.2

FIG.3

FIG.4

0111572

# EUROPÄISCHER RECHERCHENBERICHT

**0111572**
Nummer der Anmeldung

**Europäisches Patentamt**

EP   82 11 1505

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 655 979  (D. JERNIGAN)<br>* Ansprüche 1-36 * | 1,2,5 | G 01 G    9/00 |
| X | US-A-3 757 122  (A. BOSSEN et al.)<br>*  Spalte 5, Zeilen 24-50; Spalte 4, Zeilen 3-43 * | 1,2 | |
| A,D | DD-C-  130 963  (GLÄSER, MANFRED et al.)<br>* Ansprüche 1,2 * | 1 | |
| A | DE-A-1 473 143  (OHMART CORP.)<br>* Ansprüche 1-18 * | 1 | |
| A | US-A-4 047 029  (J. ALLPORT)<br>* Anspruch 1 * | 1 | |

| | | | RECHERCHIERTE SACHGEBIETE (Int. Cl. ³) |
|---|---|---|---|
| | ----- | | G 01 G<br>G 01 F<br>G 01 N |

Der vorliegende Recherchenbericht wurde für alle Patentansprüche erstellt.

| Recherchenort<br>DEN HAAG | Abschlußdatum der Recherche<br>22-07-1983 | Prüfer<br>VAN DEN BULCKE E. |
|---|---|---|